# EUROPÄISCHE PATENTSCHRIFT

(11) **EP 2 684 592 B1**
(45) Veröffentlichungstag und Bekanntmachung des Hinweises auf die Patenterteilung: **30.11.2016**
(21) Anmeldenummer: 12175990.6
(22) Anmeldetag: 11.07.2012
(51) Int. Cl.: B01D 46/24, B01D 46/00

(54) **Filterkerze**
Filter candle
Bougie filtrante

(43) Veröffentlichungstag der Anmeldung: 15.01.2014
(73) Patentinhaber: BWF Tec GmbH & Co. KG, 89362 Offingen (DE)
(72) Erfinder: Flurer, Werner, 74638 Waldenburg (DE); Rosa, Wilhelm, 74423 Obersontheim/Mittelfischach (DE); Hense, Bernd, 73207 Plochingen (DE)
(74) Vertreter: Ter Meer Steinmeister & Partner

(56) Entgegenhaltungen:
- WO-A1-2005/072848
- DE-A1- 2 713 033
- DE-A1- 2 810 937
- DE-A1- 4 118 521
- DE-A1- 10 063 462
- DE-U1- 8 905 172
- US-A- 5 223 138

## Beschreibung

Die Erfindung betrifft eine Filterkerze und insbesondere eine Filterkerze mit modularen Filterelementen zum Filtern von Partikeln aus einem heißen Gas sowie eine Reinigungsvorrichtung zum Filtern von Partikeln aus einem heißen Gas.

In der Entstaubungstechnik stellt die Heißgasfiltration oder Hochtemperaturentstaubung ein besonderes Anwendungsgebiet dar. Die Heißgasfiltration zeichnet sich durch Betriebstemperaturen oberhalb von 250 °C aus und folglich müssen spezielle Filtermaterialien verwendet werden, die eine hohe Temperaturbeständigkeit im Bereich von > 260 °C bis 1100 °C und eine hervorragende Temperaturwechselbeständigkeit aufweisen sowie unempfindlich gegenüber Funkenflug und nicht brennbar sind. Im Allgemeinen wird zur Heißgasfiltration ein Filterelement oder eine Filterkerze zum Filtern von Partikeln aus einem heißen Gas verwendet, das ein faseriges Filtermaterial aufweist. Die Filterkerzen oder Filterelemente sind einstückig aus dem faserigen Filtermaterial aufgebaut, wodurch sich Beschränkungen aufgrund des verwendeten Filtermaterials ergeben.

Das zu filternde Gas stellt hierbei ein disperses System aus in dem Gas verteilen Partikeln dar. Die Partikel weisen einen Äquivalentdurchmesser von insbesondere < 500 µm auf. Der Äquivalentdurchmesser entspricht hier beispielsweise dem Durchmesser einer Kugel gleicher mittleren Projektionsfläche, dem Durchmesser einer Kugel gleichen Volumens oder dem Durchmesser einer Kugel gleicher Sinkgeschwindigkeit wie die des zu beschreibenden Partikels. Die Partikel werden aus dem Gas mittels eines Filtermaterials herausgefiltert, wobei auf einer Seite des Filtermaterials (Rohgasseite) das ungereinigte Gas anströmt und die Partikel unter dem Einfluss verschiedener Transportmechanismen wie Trägheit und Diffusion an das Filtermaterial herantransportiert werden, allerdings das poröse Filtermaterial nicht passieren können. Auf der anderen Seite des Filtermaterials (Reingasseite) wird das gefilterte, also reine Gas abgesaugt. Hierbei bildet sich auf der Seite des unreinen Gases, also auf der Rohgasseite, durch das Abscheiden der Partikel eine Staubbeladung am Filter (Filterkuchen) aus. Der Filterkuchen ändert gleichzeitig auch die Abscheideleistung des Filterelements oder der Filterkerze. Die Abscheideleistung steigt mit dem Filterkuchen zwar zunächst an, allerdings muss dieser regelmäßig abgereinigt werden, um eine gute Abscheideleistung über einen längeren Zeitraum aufrecht zu erhalten. Zur Regenerierung des Filterelements oder der Filterkerze muss also der Filterkuchen abgetrennt werden. Dazu müssen beispielsweise die Van-der-Waalschen-Kräfte im Filterkuchen überwunden werden. Dies erfolgt typischerweise durch Strömungskräfte, die durch eine Gasströmung in der entgegengesetzten Richtung zur Filtrationsrichtung erzeugt werden, also vom Filtermaterial in Richtung des Filterkuchens.

Insbesondere steigt mit zunehmender Filterfläche auch die Abscheideleistung der Filterelemente bzw. Filterkerzen an und es ist daher wünschenswert, Filterelemente mit einer möglichst großen Oberfläche einzusetzen. Hierbei ist insbesondere eine Verlängerung der Filterkerzen vorteilhaft, da in einer herkömmlichen Reinigungsvorrichtung zum Filtern von Partikeln aus einem heißen Gas eine Vielzahl von Filterelementen nebeneinander angeordnet sind und sich eine Verlängerung eines im Wesentlichen zylindrischen Filterelements nicht zu ungunsten eines Verhältnisses aus Filteroberfläche zu Filtervolumen auswirkt. Allerdings besteht hier das Problem, dass die Filtermaterialien porös sind und somit keine ausreichende mechanische Stabilität über große Abmessungen oder Längen gewährleisten oder bereitstellen können. Insbesondere stellt auch der Transport der einzelnen Filterelemente ein Problem dar, da sie durch die mechanische Belastung oder Beanspruchung während des Transports brechen und somit auf dem Transport vom Hersteller zur Reinigungsanlage beschädigt werden können. Folglich sind die aktuell herstellbaren Filterelemente auf eine Länge von maximal etwa 2,20 m bis 3,00 m begrenzt.

Aus der DE 89 05 172.6 ist ein Filterelement für Heißgas-Entstaubungsanlagen bekannt, das aus einem zylindrischen Rohr aus gepresster Steinwolle besteht, das mit Kohlegranulat durchsetzt ist. Das Rohr kann aus mehreren Rohrteilen bestehen, die mittels in der Außenwand des Rohres ausgebildeten Absätzen und Vertiefungen mit gleichen Durchmessern ineinander steckbar sind.

DE 27 13 033 A1 zeigt ein Filterelement zum Filtern von Partikeln aus einem heißen Gas. Das Filterelement besteht aus einem Filter, der aus zusammengeklebten Fasern aufgebaut ist, und einer zylindrischen Halterung, die aus gestrecktem oder perforiertem Stahl oder Aluminium ausgebildet ist. Die zylindrische Halterung kann alternativ zwischen zwei Filtern oder nur an einer Seite eines Filters vorgesehen sein. Zum Verbinden des Filterelements mit einem Abschlussstück wird mindestens eine Seite des Filterelements konisch abgeflacht und in Verbindung mit zumindest einer konischen Seitenfläche des Abschlussstücks gebracht. Alternativ kann auch eine Abdichtung des Filterelements zum Abschlussstück mittels einer Gummidichtung erfolgen. Auch kann das Filterelement einen radialen Außenflansch aufweisen, der zwischen zwei konvergierend konischen Oberflächen eingeklemmt wird.

Die US 5,223,138 A offenbart eine verstärke Keramikfilterkerze, die ein Filtermaterial aus Keramikfasern und ein Verstärkungsteil aus einem perforierten Metallblech umfasst. Die Filterkerze weist in ihrem oberen Bereich einen radialen Flansch auf, dessen nach außen gezogene Form dem Verstärkungsteil im Wesentlichen folgt.

Die DE 41 18 521 A1 zeigt ein Faserformteil für Hochtemperaturfilterung mit einem Rohrabschnitt und einem Flansch an einem Ende des Rohrabschnitts. Im Bereich des Rohrabschnitts verläuft ein Verstärkungsgewebe im Wesentlichen axial und biegt dann im Bereich des Flanschs radial nach außen um, wodurch die Bruchgefahr im Bereich des Flanschs herabgesetzt wird. Das Verstärkungsgewebe besteht aus Verstärkungsfäden, die Mono- oder Multifilamente aus Metall- oder Keramikwerkstoffen aufweisen.

Die WO 2005/072848 A1 betrifft eine Filterelementanordnung mit einem Filterelement mit einem Rohr und einem sich radial nach außen erstreckenden Flansch 24 an einem Ende, wobei das entgegengesetzte Ende verschlossen ist. In dem Rohr oder an dessen Innen- oder Außenumfang kann ein steifer Verstärkungskäfig vorgesehen sein. Zudem kann ein Stützelement vorgesehen sein, das mit einem zylindrischen Abschnitt am Innenumfang des Rohrs des Filterelements anliegt und das einen Flanschabschnitt aufweist, der auf der oberen Oberfläche des Flansches aufliegt. Das Verstärkungselement dient wie auch die Verstärkungsfäden bei der DE 41 18 521 A1 nur zur Reduzierung der Bruchgefahr im Bereich des Befestigungsflansches mit dem das Filterelement zwischen zwei Platten geklemmt gehalten wird.

Die DE 100 63 462 A1 betrifft eine Filterkerze mit einem gesinterten Filterrohr, das mit einem massiven Flansch aus Grauguss verbunden ist. Der Flansch weist einen Ansatz 5 oder Flanschabschnitt mit Bohrungen zur Befestigung der Filterkerze in einer Apparatur oder ähnlichem auf. Der Flansch weist eine sich in Richtung der Filterachse erstreckende zylindrische Wand auf, die mit Ausnehmungen versehen ist. Zusätzlich zu den Ausnehmungen können in der Flanschwand auch Bohrungen vorgesehen sein. Die sich axial erstreckende Umfangswand des Flansches ist bei der fertigen Filterkerze in der Wand des Filterrohrs durch Pressen und anschließendes Sintern integriert, so dass der Flansch mittels der zylindrischen Wand am Filterrohr der Filterkerze gehalten ist.

Davon ausgehend liegt der Erfindung die Aufgabe zugrunde, eine Filterkerze zum Filtern von Partikeln aus einem heißen Gas, die bei großer Länge eine hohe mechanische Stabilität als auch Flexibilität bietet, sowie eine diese umfassende Reinigungsvorrichtung zum Filtern von Partikeln aus einem heißen Gas bereitzustellen.

Diese Aufgabe wird durch die Filterkerze nach Anspruch 1 sowie durch die Reinigungsvorrichtung nach Anspruch 14 gelöst. Vorteilhafte Ausgestaltungen und Weiterbildungen der Erfindung sind in den Unteransprüchen beschrieben.

Erfindungsgemäß besteht eine Filterkerze zum Filtern von Partikeln aus einem heißen Gas aus zumindest zwei Filterelementen. Jedes der Filterelemente umfasst dabei ein faseriges Filtermaterial und einen rohrförmigen oder zylinderförmigen Stützkörper, der eine Vielzahl von Öffnungen und einen Kopplungsteil aufweist, und der in das faserige Filtermaterial eingebettet oder eingesaugt ist. Der Kopplungsteil ist an einem Ende des rohrförmigen Stützkörpers vorgesehen, sodass die zumindest zwei Filterelemente so miteinander verbunden sind, dass die Verbindungsstelle der rohrförmigen Stützkörper der Filterelemente gasdicht oder partikeldicht verschlossen ist. Dabei umfassen die Kopplungsteile der Stützkörper der Filterelement jeweils einen gebördelten Rand des rohrförmigen Stützkörpers oder einen flanschartigen Verbindungsabschnitt eines flanschförmigen Stützkörpers, der mit einem Ende des rohrförmigen Stützkörpers verbunden ist. Der gebördelte Rand oder der flanschartige Verbindungsabschnitt an einem der Filterelemente ist mittels eines Verbindungsrings mit dem gebördelten Rand oder dem flanschartige Verbindungsabschnitt an dem anderen Filterelement verbunden.

Es ist also eine Filterkerze aus Filterelementen vorgesehen, die eine hohe mechanische Stabilität aufweisen. Die Erfindung stellt somit modulare Filterkerzen bereit, die gemäß einem Baukastenprinzip aufgebaut sind und die eine frei wählbare Anzahl von einzelnen Filterelementen aufweisen. Somit können Filterkerzen mit hoher mechanischer Stabilität in nahezu beliebiger Länge ausgebildet werden, die modular transportiert und aufgebaut werden können.

Vorzugsweise ist der rohrförmige Stützkörper der Filterelemente einstückig und insbesondere aus einem Streckmetall ausgebildet.

Bei einer vorteilhaften Ausgestaltung der Erfindung sind die Öffnungen im rohrförmigen Stützkörper regelmäßig angeordnet und mit gleicher Größe vorgesehen.

Bei einer besonders bevorzugten Ausgestaltung der Erfindung weisen die Öffnungen eine Größe auf, die groß genug ist, so dass der rohrförmige Stützkörper nicht als Filter oder Sieb für das faserige Filtermaterial wirkt, so dass vorzugsweise die Filterfasern des faserigen Filtermaterials leicht durch den rohrförmigen Stützkörper durchgesaugt werden können.

Durch die vergleichsweise großen Öffnungen wird das Filtermaterial durch den rohrförmigen Stützkörper gesaugt und dieser dient somit insbesondere nicht als Sieb oder Filter für das faserige Filtermaterial, an dem die Fasern des faserigen Filtermaterials hängenbleiben.

Dadurch kann der rohrförmigen Stützkörper einfach ins Filtermaterial eingebettet oder eingesaugt werden.

Vorteilhafterweise liegt eine Öffnungsfläche der Außenwand des rohrförmigen Stützkörpers im Vergleich mit der Gesamtfläche der Außenwand des rohrförmigen Stützkörpers bei 5% bis 80%, vorzugsweise bei 25% bis 80% und insbesondere bei 50% bis 70%.

Bei einer bevorzugten Ausgestaltung der Erfindung umfasst das Filtermaterial Glasfasern oder Keramikfasern und der rohrförmige Stützkörper umfasst ein metallisches Material, wie Stahl, Edelstahl und/oder ist sendzimirverzinkt, oder ein nicht-metallisches Material, wie Kunststoff, Keramik oder Ähnliches, und ist aus einem Lochblech, Drahtgitter oder Streckmetall ausgebildet.

Vorzugsweise ist der rohrförmige Stützkörper komplett oder teilweise vom Filtermaterial umschlossen oder vollständig oder teilweise im Filtermaterial eingebettet oder eingesaugt. Hierbei kann beispielsweise der rohförmige Stützkörper faseriges Filtermaterial innerhalb seiner Öffnungen aufweisen, wobei Teile der Innenwand freiliegen.

Vorzugsweise ist ein Ende des Filterelements mit dem faserigen Filtermaterial verschlossen.

Vorzugsweise ist an einem Ende des Filterelements eine Aufnahmevorrichtung vorgesehen.

Bei einer besonders bevorzugten Ausgestaltung der Erfindung ist ferner ein Skelett vorgesehen, das im faserigen Filtermaterial eingebettet oder eingesaugt ist, und das sich im Wesentlichen über die gesamte Länge des Filterelements erstreckt. Das Skelett ist hierbei vorzugsweise aus Metall, wie Stahl oder Edelstahl, gefertigt, wobei das Metallskelett in diesem Fall sendzimirverzinkt sein kann. Es ist jedoch auch möglich, das Skelett aus einer Keramik oder einem hochtemperaturstabilen Kunststoff herzustellen.

Erfindungsgemäß können also mindestens zwei Filterelemente formschlüssig miteinander verbunden werden, so dass diese gemeinsam einen zusammengesetzten, also längeren, Filter ausbilden.

Vorteilhafterweise weist das Filterelement ferner ein Verbindungsrohr oder Stützrohr auf, das dazu vorgesehen ist, so in den Innenraum des rohrförmigen Stützkörpers eingesetzt zu werden, dass es von einem Ende eines ersten Filterelements der zumindest zwei Filterelemente in den Innenraum eines Endes eines zweiten Filterelements der zumindest zwei Filterelemente im verbundenen Zustand hineinragt, um einen Übergangsbereich zwischen den zumindest zwei verbundenen Filterelementen abzustützen und/oder abzudichten.

Erfindungsgemäß ist eine Reinigungsvorrichtung zum Filtern von Partikeln aus einem heißen Gas mit einer Reingasaustrittsvorrichtung und zumindest einer Filterkerze mit zumindest zwei in ihrer Längsrichtung hintereinander angeordneten und miteinander verbundenen Filterelementen ausgerüstet, die an die Reingasaustrittsvorrichtung angeschlossen ist, wobei Gas von der Rohgasseite durch ein faseriges Filtermaterial der zumindest zwei Filterelemente der Filterkerze in den Innenraum der zumindest zwei rohrförmigen Stützkörper der zumindest zwei Filterelemente auf der Reingasseite transportiert und dabei gefiltert wird. Vorzugsweise ist das von der Reingasaustrittsvorrichtung am weitesten entfernte Filterelement an seinem von der Ansaugrichtung abgewandten Ende verschlossen. Insbesondere kann das zu reinigende Gas von der Rohgasseite durch die zumindest zwei Filterelemente gedrückt oder von der Reingasseite durch die zumindest zwei Filterelemente gesaugt werden.

Die Erfindung wird im Folgenden beispielsweise anhand der Zeichnungen näher erläutert. Es zeigen:
Figur 1A eine schematische Schnittdarstellung zweier miteinander verbundener, erfindungsgemäßer Filterelemente mit einem rohrförmigen Stützkörper, der komplett von Filtermaterial umschlossen ist;
Figur 1B eine vergrößerte Darstellung des mit A gekennzeichneten Bereichs aus der Figur 1A;
Figur 2A eine schematische Schnittdarstellung zweier miteinander verbundener, erfindungsgemäßer Filterelemente, die als Kopplungsteil einen flanschförmigen Stützkörper aufweisen;
Figur 2B eine vergrößerte Darstellung des mit B gekennzeichneten Bereichs aus der Figur 2A;
Figur 3A eine schematische Schnittdarstellung zweier miteinander verbundener, erfindungsgemäßer Filterelemente, wobei in der Verbindungsstelle ein zusätzlicher Dichtring angeordnet ist;
Figur 3B eine vergrößerte Darstellung des mit C gekennzeichneten Bereichs aus der Figur 3A;
Figur 4A eine schematische Schnittdarstellung zweier miteinander verbundener, erfindungsgemäßer Filterelemente, die ein Verbindungsrohr aufweisen;
Figur 4B eine vergrößerte Darstellung des mit D gekennzeichneten Bereichs aus der Figur 4A;
Figuren 5A bis 5D schematische Schnittdarstellungen von mit dem erfindungsgemäßen Filterelement verbundenen Aufnahmevorrichtungen;
Figur 6 eine schematische Schnittdarstellung einer mit dem erfindungsgemäßen Filterelement verbundenen Metallkappe;
Figur 7A eine schematische Schnittdarstellung einer erfindungsgemäßen Reinigungsvorrichtung, die ein Umlenkelement aufweist; und
Figur 7B eine schematische Schnittdarstellung einer erfindungsgemäßen Reinigungsvorrichtung.

In den verschiedenen Figuren der Zeichnungen sind einander entsprechende Bauteile mit gleichen Bezugszeichen versehen.

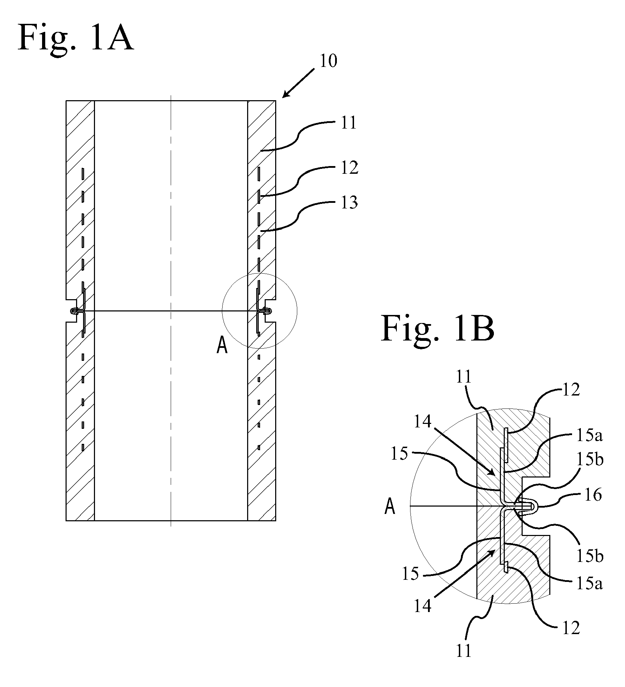

Wie in den Figuren 1A und 1B dargestellt, umfasst das erfindungsgemäße Filterelement 10 zum Filtern von Partikeln aus einem heißen Gas ein faseriges Filtermaterial 11 und einen im faserigen Filtermaterial 11 eingebetteten oder eingesaugten rohrförmigen oder zylinderförmigen Stützkörper 12, der eine Vielzahl von Öffnungen 13 aufweist. Das Filterelement 10 kann insbesondere eine zylindrische Form aufweisen.

Der rohrförmige Stützkörper 12 wird bei der Herstellung des Filterelementes 10 in das faserige Filtermaterial 11 eingesaugt. Dabei wird der rohrförmige Stützkörper 12 vorzugsweise an einer Innenseite eines ebenfalls rohrförmigen oder zylinderförmigen faserigen Filtermaterials 11 eingebettet. Es ist jedoch auch vorstellbar, dass der rohrförmige Stützkörper 12 an einer Außenseite des faserigen Filtermaterials 11 sitzt oder mittig in das faserige Filtermaterial 11 eingebettet ist. Insbesondere passieren bei der Herstellung die Fasern des faserigen Filtermaterials 11 die Öffnungen 13 in der zylindrischen Wand des rohrförmigen Stützkörpers 12, sodass der rohrförmige Stützkörper 12 in dem faserigen Filtermaterial 11 eingebettet wird. Somit verbleibt ein Verbundkörper aus rohrförmigen Stützkörper 12 und vorzugsweise ebenfalls rohrförmigen faserigen Filtermaterial 11, der einen Innenkanal aufweist.

Die Öffnungen 13 im rohrförmigen Stützkörper 12 sind also größer als eine durchschnittliche Filterfaserlänge des faserigen Filtermaterial 11 ausgebildet, wodurch diese nicht als Filter oder Sieb für das faserige Filtermaterial 11 wirken. Bevorzugt weisen die Öffnungen 13 eine Größe auf, die groß genug ist, so dass der rohrförmige Stützkörper 12 nicht als Filter oder Sieb für das faserige Filtermaterial 11 wirkt und der rohrförmige Stützkörper somit gut in das faserige Filtermaterial 11 einsaugbar ist. Das faserige Filtermaterial 11 umfasst bevorzugt Mikrofasern, die insbesondere eine Filterfaserlänge von 5 µm bis 50 mm aufweisen.

Weiterhin weist der rohrförmige Stützkörper 12 eine Vielzahl von vorzugsweise gleichmäßig verteilten Öffnungen 13 auf, sodass die Öffnungsfläche der Außenwand des rohrförmigen Stützkörpers 12 insbesondere größer als die geschlossene Fläche der Außenwand des rohrförmigen Stützkörpers ist. Die Öffnungsfläche entspricht hier der Fläche, die durch die Öffnungen 13 gebildet bzw. freigelegt wird. Die geschlossenen Fläche entspricht der verbleibenden Fläche der Außenwand des rohrförmigen Stützkörpers 12. Folglich entspricht die Gesamtfläche der Außenwand des rohrförmigen Stützkörpers 12 der Summe aus Öffnungsfläche und geschlossener Fläche. Vorzugsweise liegt die Öffnungsfläche der Außenwand des rohrförmigen Stützkörpers im Vergleich zur Gesamtfläche der Außenwand des rohrförmigen Stützkörpers bei 5% bis 80%, vorzugsweise bei 25% bis 80% und insbesondere bei 50% bis 70%.

Obwohl es grundsätzlich möglich ist, den rohrförmigen Stützköper 12 aus einer Vielzahl von geeigneten Materialien auszubilden, wie beispielsweise einem Lochblech oder einem Drahtgitter, so ist es besonders bevorzugt, dass der rohrförmige Stützkörper 12 einstückig aus einem Streckmetall ausgebildet ist. Der rohrförmige Stützköper 12 kann aus jedem geeigneten Metall ausgebildet sein, umfasst aber bevorzugt Stahl und/oder Edelstahl und/oder ist sendzimirverzinkt. Insbesondere kann der rohrförmige Stützkörper 12 ein sendzimirverzinktes Streckmetall mit rautenförmigen Maschen aufweisen. Die Rauten können in Streckrichtung eine Länge von ca. 16 mm und senkrecht dazu eine Breite von ca. 8 mm aufweisen. Bevorzugte Stegdicken liegen im Bereich von 1,0 mm bis 1,5 mm. Um die mechanische Stabilität weiter zu erhöhen sind die rautenförmigen Maschen des Streckmetalls vorzugsweise mit ihre Länge senkrecht zur Axialrichtung des rohrförmigen Stützkörpers ausgerichtet und sind so ausgebildet, dass sich die einzelnen Rauten an ihren Ecken jeweils mit den benachbarten Rauten überlappen, um die Knotenpunkte zwischen den Maschen zu verstärken.

Das faserige Filtermaterial 11 ist ein Material, das geeignet ist, um Partikel aus einem heißen Gas zu filtern. Eine Temperatur des heißen Gases liegt hierbei bevorzugt in einem Bereich von > 260 °C bis ca. 1100 °C. Vorzugsweise umfasst das faserige Filtermaterial 11 Glasfasern, Keramikfasern, biolösliche Hochtemperaturfasern, Faserkeramik oder Sintermetall, also Fasern, die besonders thermostabil sind. Besonders bevorzugt sind Mikrofasern, die eine Faserlänge im Bereich von 5 µm bis 50 mm aufweisen. Insbesondere sind nichtmetallische Materialen für das faserige Filtermaterial 11 bevorzugt, die ein stabiles vliesartiges Gewebe oder Vlieskörper ausbilden, das ohne zusätzliche Stütze, wie beispielsweise ein Gerüst, ein Skelett, oder eine Außenwand, formstabil ist. Besonders bevorzugte Materialien für das faserige Filtermaterial 11 sind Hochtemperaturwollen wie Aluminiumsilikatwolle und Erdalkalisilikatwolle.

Wie in den Figuren 1A und 1B gezeigt können zwei Filterelemente 10 über Kopplungsteile 14 miteinander verbunden werden. Der Kopplungsteil 14 kann an einem oder beiden Enden des rohrförmigen Stützkörpers 12 vorgesehen sein und dient der vorzugsweise lösbaren Verbindung von zwei benachbarten Filterelementen 10. Der Kopplungsteil 14 ist vorzugsweise an dem Ende des rohrförmigen Stützkörpers 12 vorgesehen, das sich in der Nähe eines Endes des faserigen Filtermaterials 11 befindet. Der Kopplungsteil 14 dient dem Verbinden von zumindest zwei benachbarten Filterelementen 10 miteinander, so dass die Bereiche, in denen die Kopplungsteile 14 ausgebildet sind, gasdicht oder partikeldicht miteinander verbunden wurden. Dazu kann der Kopplungsteil 14 einen flanschförmigen Stützkörper 15 mit einem zylindrischen Innenteil 15a und einem flanschartigen Verbindungsabschnitt 15b aufweisen, dessen zylindrischer Innenteil 15a mit einem Ende des rohrförmigen Stützkörpers 12 verbunden ist und keine Öffnungen aufweist. Dabei ist der zylindrische Innenteil 15a des flanschförmigen Stützkörpers 15 mit dem rohrförmigen Stützkörper 12 gasdicht oder partikeldicht verbunden, der vom faserigen Filtermaterial 11 umschlossen oder umgeben ist. Hierfür kann der flanschförmige Stützkörper 15 mit seinem zylindrischen Innenteil 15a mit dem rohrförmigen Stützkörper 12 verschweißt, vorzugsweise punktverschweißt werden.

Alternativ kann der Kopplungsteil 14 auch einen gebördelten Rand des rohrförmigen Stützkörpers 12 umfassen. Dann steht der rohrförmige Stützkörper 12 über das Ende des Filtermaterials 11 hinaus und wird umgebogen bzw. gebördelt, um einen Flanschabschnitt auszubilden. In diesem Fall ist es bevorzugt, wie in den Figuren 1A und 1B dargestellt, dass der Kopplungsabschnitt 14, also auch der gebördelte Rand, von dem Filtermaterial 11 umschlossen ist, um das Filterelement 10 auch im Bereich des Kopplungsteils 14 partikeldicht abzuschließen.

Beim Verbinden zweier benachbarter Filterelemente 10 sind die Kopplungsteile 14 der zwei benachbarten Filterelemente 10 mittels eines Verbindungsrings 16 miteinander verbunden oder verschlossen. Wie in den Figuren 1A und 1B dargestellt, ist der flanschartige Verbindungsabschnitt 15b des flanschförmigen Stützkörpers 15 des Kopplungsteils 14 mittels des Verbindungsrings 16 mit einem weiteren Filterelement 10 verbunden, wobei zwei flanschartige Verbindungsabschnitte 15b zweier Filterelemente 10 durch den Verbindungsring 16 umschlossen und gasdicht verbunden werden. Alternativ kann der Verbindungsring 16 auch die gebördelten Ränder zweier benachbarter Filterelemente 10 verbinden. Auch vorstellbar wäre ein Verbinden eines gebördelten Randes eines ersten Filterelements 10 mit einem flanschförmigen Stützkörper 15 eines zweiten Filterelements 10 mittels des Verbindungsrings 16.

Der Verbindungsring 16 ist vorzugsweise als Rohrschelle oder Schraubverschluss und insbesondere als Totpunktschnellverschluss ausgebildet. Dieser kann vorzugsweise nach Verschluss wieder geöffnet werden, um so einen Austausch von einzelnen Filterelementen zu ermöglichen.

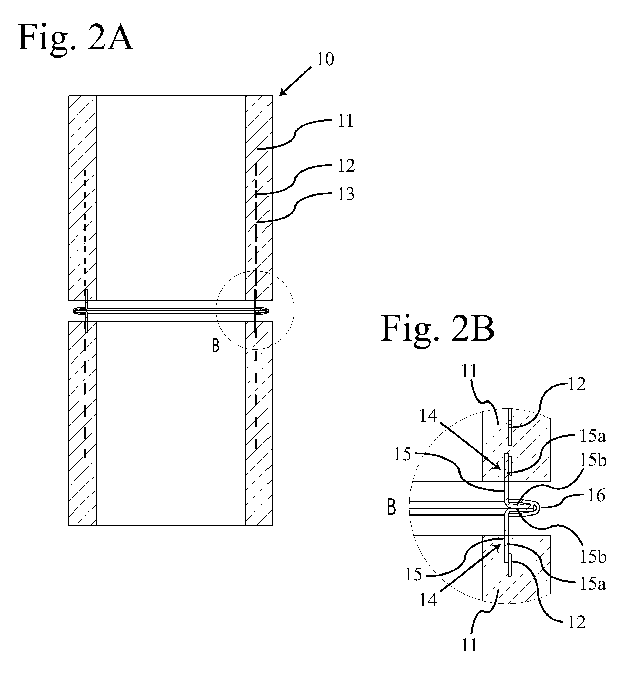

Besondere Bedeutung kommt der Tatsache zu, dass die Verbindung zweier benachbarter Filterelemente 10 an der Verbindungsstelle nach außen partikeldicht oder gasdicht ist, um ein Eindringen von zu reinigendem oder ungereinigtem Gas in das Filterelement 10 zu verhindern. Dazu kann wie in den Figuren 1A und 1B dargestellt, der Kopplungsteil 14 komplett von Filtermaterial 14 umschlossen sein. Alternativ kann, wie in den Figuren 2A und 2B gezeigt, der Kopplungsteil 14 nicht von Filtermaterial umschlossen sein. Dann muss allerdings gewährleistet sein, dass die Verbindung des Kopplungsteils 14 mit dem Filtermaterial 11 partikeldicht ist und bevorzugt gasdicht ist, um einen Druckabfall über die Verbindungsstelle zu vermeiden.

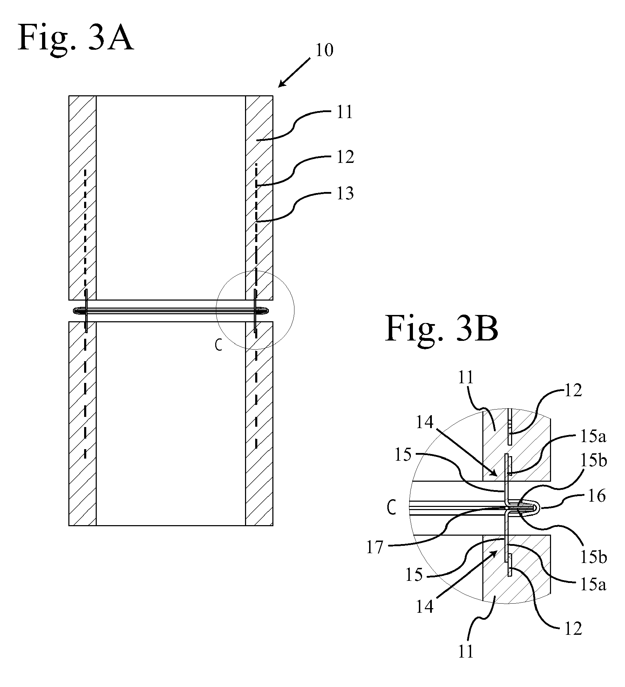

Wie in den in den Figuren 3A und 3B gezeigt kann, um die Gasdichtigkeit oder Partikeldichtigkeit der Verbindung weiter zu erhöhen, im Bereich des Kopplungsteils 14 ferner eine Dichtung 17 oder ein Dichtring 17 ausgebildet sein. Die Dichtung 17 ist vorzugsweise als O-Ring entlang der Innenwand der zylindrischen Innenteile 15a der flanschförmigen Stützkörper 15 oder der gebördelten Ränder, als zwei Flachdichtungen oder als ringförmige Flachdichtung entlang der gesamten Verbindungsstelle, also den Stirnseiten der flanschartigen Verbindungsabschnitten 15b oder der gebördelten Ränder, ausgebildet. Bevorzugt ist sie umfänglich im Bereich der gebördelten Ränder bzw. des flanschförmigen Stützkörpers 15 des Kopplungsteils 14 ausgebildet.

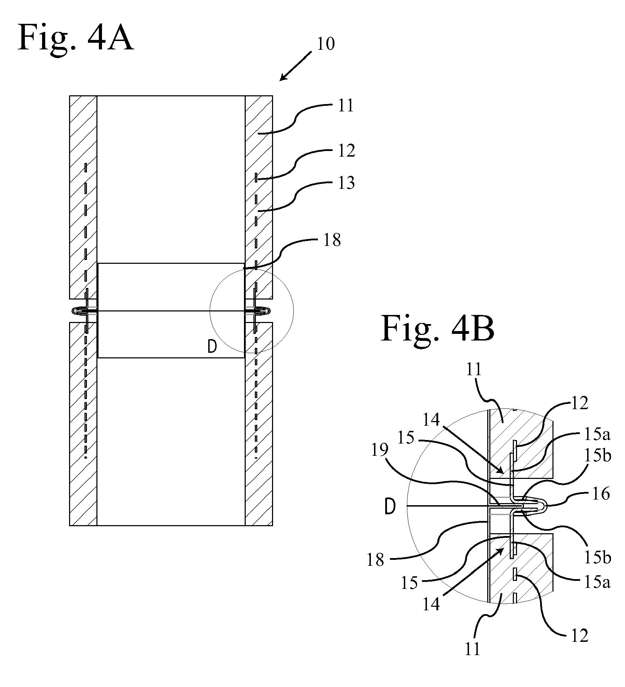

In der in den Figuren 4A und 4B gezeigten Ausführungsform der vorliegenden Erfindung ist ferner ein Verbindungsrohr oder Stützrohr 18 in den Innenraum zweier benachbarter, miteinander verbundener rohrförmigen Stützkörper 12 eingesetzt. Im verbundenen Zustand ragt das Verbindungsrohr 18 oder Stützrohr 18 von einem Ende des einen Filterelements 10 in den Innenraum eines Endes eines zweiten Filterelements 10. Das Verbindungsrohr 18 stützt dabei den Übergangsbereich zwischen den benachbarten, verbundenen Filterelementen 10 ab. Neben der mechanischen Stabilität kann das Verbindungsrohr 18 auch abdichtend wirken, um den Übergangsbereich zwischen den miteinander verbundenen Filterelementen 10 noch gasdichter bzw. partikeldichter abzuschließen. Insbesondere kann hier durch die abdichtende Wirkung des Verbindungsrohrs 18 auf eine zusätzliche Dichtung 17 verzichtet werden.

Das Verbindungsrohr 18 verfügt vorzugsweise über eine Sicke 19 oder einen radialen Vorsprung 19, die/der der Außenwand des Verbindungsrohrs 18 umfänglich angeordnet ist und sich in radialer Richtung von der Außenwand des Verbindungsrohrs 18 weg erstreckt. Die Sicke 19 ist so ausgebildet, dass sie mit den Kopplungsteilen 14 der zwei benachbarten Filterelemente 10 in Kontakt tritt. Vorzugsweise liegt die Sicke 19 jeweils an einer Außenseite der zwei benachbarten Kopplungsteile 14 an, liegt also im verbundenen Zustand zwischen den flanschförmigen Verbindungsabschnitten 15b zweier benachbarter Filterelemente 10 oder zwischen den gebördelten Rändern zweier benachbarter Filterelemente 10, und wird zusammen mit den beiden Kopplungsteilen 14, also den flanschförmigen Verbindungsabschnitten 15b oder den gebördelten Rändern, vom Verschlussring 16 umgriffen und verschlossen. Dadurch wird das Verbindungsrohr 18 in axialer Richtung fixiert und es kann nicht innerhalb des Filterelementes 10 verrutschen.

Zusätzlich kann die Verbindungsstelle auch von außen über eine weitere Dichtung (nicht gezeigt) abgeschlossen werden. Vorzugsweise ist auch ein Außendurchmesser des Filterelements 10 im Bereich der Verbindungsstelle kleiner als ein Außendurchmesser des Filterelements 10 in einem Bereich, in dem keine Verbindungsstelle ausgebildet ist.

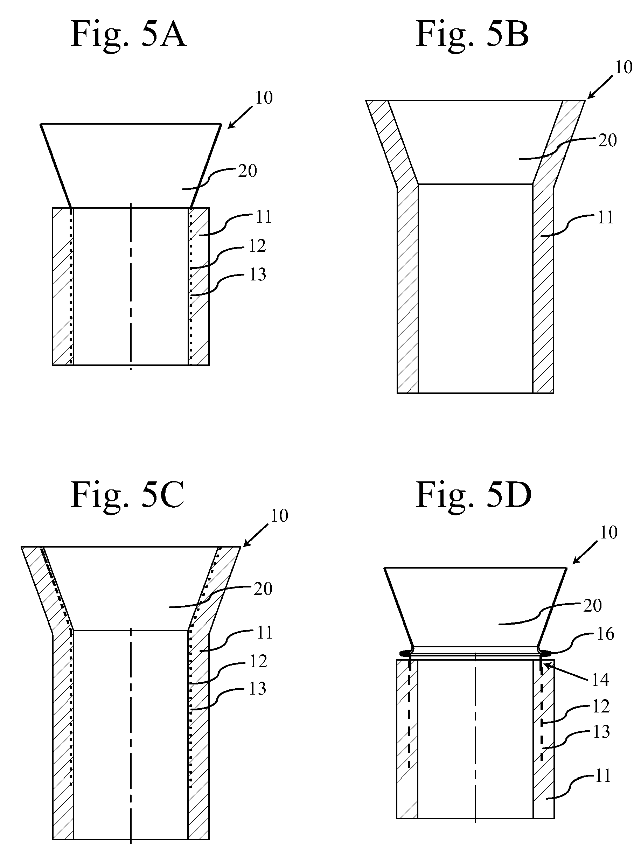

Wie in den Figuren 5A bis 5D gezeigt kann zur Aufnahme des Filterelements 10 in eine Reinigungsvorrichtung an einem Ende des Filterelements 10 eine Aufnahmevorrichtung 20 vorgesehen sein. Die Aufnahmevorrichtung 20 kann konisch mit einem größer werdenden Durchmesser in Form eines Einspannkegels ausgebildet sein. Alternativ kann auch ein weiterer Kragen als Aufnahmevorrichtung 20 dienen, von dem ein Flanschabschnitt nach außen abgeht, um eine vom Filterelement 10 rechtwinklig abgesetzte Aufnahmevorrichtung 20 bereitzustellen. Hierbei sollte der Flanschabschnitt des Kragens größer ausgebildet werden als es dem Außendurchmesser des Filterelements 10 entspricht, um eine Aufnahme in eine Reinigungsanlage zu ermöglichen. Die Aufnahme oder das Einspannen eines aus zumindest zwei Filterelementen 10 gebildeten Gesamtfilters oder gebildeter Filterkerze erfolgt vorzugsweise in einem oberen Teil des Gesamtfilters, wobei der Gesamtfilter in seinem Bodenbereich abgedichtet ist. Auch kann als Aufnahmevorrichtung 20 ein Teil des rohrförmigen Stützkörpers 12, insbesondere ein gebördelter Rand des rohrförmigen Stützkörpers 12, dienen.

In der in der Figur 5A gezeigten Ausführungsform ist die Aufnahmevorrichtung 20 als Einspannkegel ausgebildet und nicht vom faserigen Filtermaterial 11 umschlossen. Der Einspannkegel ist mit dem rohrförmigen Stützkörper 12 verbunden und besteht vorzugsweise aus dem gleichen Material wie der rohrförmige Stützkörper 12. Insbesondere kann der Einspannkegel auch ein über das faserige Filtermaterial hinaus stehender Teil des rohrförmigen Stützkörpers 12 sein, der sich vom faserigen Filtermaterial 11 aus konisch öffnet.

In der in der Figur 5B gezeigten Ausführungsform ist die Aufnahmevorrichtung 20 als ein konischer Abschnitt aus faserigem Filtermaterial 11 ausgebildet und weist keinen rohrförmigen Stützkörper 12 auf.

In der in der Figur 5C gezeigten Ausführungsform ist die Aufnahmevorrichtung 20 ebenfalls als ein konischer Abschnitt aus faserigem Filtermaterial 11 ausgebildet und weist j e-doch den rohrförmigen Stützkörper 12 auf. Der rohrförmige Stützkörper 12 kann sowohl im Bereich der Aufnahmevorrichtung 20 als auch in dem sich daran anschließenden Bereich des Filterelements 10 ausgebildet sein. Besonders vorteilhaft ist hier ein einstückiges Ausbilden des rohrförmigen Stützkörpers 12, um die mechanische Stabilität des Filterelements 10 im Bereich der Aufnahmevorrichtung 20 und insbesondere am Übergang zwischen Aufnahmevorrichtung 20 und dem verbleibenden Teil des Filterelements 10 zu erhöhen.

In der in der Figur 5D gezeigten Ausführungsform ist die Aufnahmevorrichtung 20 als eine separate Einspannvorrichtung ausgebildet, die ein kegelförmiges Aufnahmeteil sowie ein flanschförmiges Kopplungsteil aufweist, das mit dem Kopplungsteil 14 eines Filterelements 10 verbindbar ist. Hierzu wurde an dem Filterelement 10 das Kopplungsteil 14 an einem Ende des rohrförmigen Stützkörpers 12 und das flanschförmige Kopplungsteil der Einspannvorrichtung mittels des Verbindungsrings 16 miteinander verbunden oder verschlossen. Hier kann auch eine Dichtung ähnlich dem Dichtring 17 vorgesehen sein, um die Gasdichtigkeit weiter zu erhöhen.

Vorzugsweise ist an einem gegenüberliegenden Ende der Aufnahmevorrichtung 20 das Filterelement 10 oder ein weiteres mit diesem Filterelement mittelbar oder unmittelbar verbundene Filterelement 10 an dessen Ende mit dem faserigen Filtermaterial 11 verschlossen. Insbesondere kann das Ende des Filterelements 10 mit in Kalottenform gebrachtem, faserigen Filtermaterial 11 verschlossen sein.

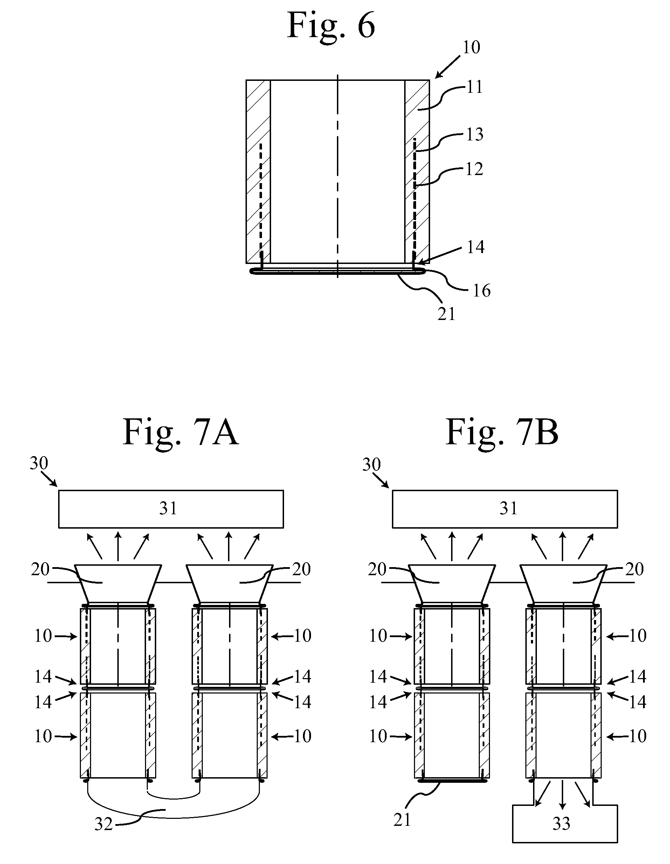

Alternativ kann das der Aufnahmevorrichtung gegenüberliegende Ende des Filterelements 10 auch auf andere Weise gasdicht verschlossen sein. Gemäß der Figur 6 kann das Filterelement 10 an einem Ende mit einer Metallkappe 21 verschlossen sein. Die Metallkappe 21 ist auf ähnliche Weise mit dem Filterelement 10 verbunden wie auch das Verbinden zweier benachbarter Filterelemente 10 erfolgt. Hierzu ist an dem Filterelement 10 das Kopplungsteil 14 an einem Ende des rohrförmigen Stützkörpers 12 und an der Metallkappe 21 ein weiterer Flanschabschnitt vorgesehen, die mittels des Verbindungsrings 16 miteinander verbunden oder verschlossen sind. Hier kann auch eine Dichtung ähnlich dem Dichtring 17 vorgesehen sein, um die Gasdichtigkeit bzw. Partikeldichtigkeit weiter zu erhöhen.

Das Filterelement 10 bzw. die mehreren miteinander verbundene Filterelemente 10 sind somit entweder vom Filtermaterial 11 umschlossen oder in den Bereichen, in denen sie vom Filtermaterial 11 nicht umschlossen sind, zumindest gasdicht oder partikeldicht gegenüber dem ungereinigten Gas abgeschlossen.

Um weiterhin die mechanische Stabilität des Filterelements 10 bzw. der mehreren miteinander verbundenen Filterelemente 10 zu erhöhen, kann ein Skelett (nicht gezeigt) im faserigen Filtermaterial 11 eingebettet oder eingesaugt sein. Das Skelett kann ähnliche Eigenschaften wie der rohrförmige Stützkörper 12 aufweisen, ist jedoch vorzugsweise über die gesamte Länge des Filterelements ausgebildet. Besonders bevorzugt ist das Skelett im Bereich der Aufnahmevorrichtung 20 ausgebildet, um hier ein Brechen des Filtermaterials 11 aufgrund der erhöhten mechanischen Beanspruchung zu verhindern. Das Skelett ist hierbei vorzugsweise aus Metall, wie Stahl oder Edelstahl, gefertigt, wobei das Metallskelett in diesem Fall sendzimirverzinkt sein kann. Es ist jedoch auch möglich, das Skelett aus einer Keramik oder einem hochtemperaturstabilen Kunststoff herzustellen.

Wie in den Figuren 7A und 7B gezeigt ist erfindungsgemäß auch eine Reinigungsvorrichtung 30 oder Reinigungsanlage 30 zum Filtern von Partikeln aus einem heißen Gas vorgesehen, die eine Reingasaustrittsvorrichtung 31 und zumindest zwei in ihrer Längsrichtung hintereinander angeordnete und miteinander verbundene Filterelemente 10 umfasst, die insbesondere gemeinsam eine Filterkerze oder einen Gesamtfilter ausbilden. Die Filterelemente 10 sind an die Reingasaustrittsvorrichtung 31 angeschlossen, um Gas aus einer Umgebung, also der Rohgasseite, durch das faserige Filtermaterial 11 der zumindest zwei Filterelemente 10 in den Innenraum der zumindest zwei rohrförmigen Stützkörper 12 der zumindest zwei Filterelemente 10, also der Reingasseite, einzusaugen. Insbesondere sind die Filterelement 10 in Bezug auf den Gastrom von der Rohgasseite zur Reingasseite parallel geschaltet. Das von der Reingasaustrittsvorrichtung 30 am weitesten entfernte Filterelement 10 ist an seinem von der Reingasaustrittsvorrichtung 31 abgewandten Ende vorzugsweise verschlossen. Wie oben beschrieben kann dies entweder durch faseriges Filtermaterial 11 oder durch eine Metallkappe 21, die das Ende gasdicht abschließt, erfolgen. Alternativ können auch die von der Reingasaustrittsvorrichtung 31 entfernten Enden von mindestens zwei Filterelementen 10, also von zwei Filterkerzen, mittels eines U-förmigen Umlenkelements 32 oder eines rohrförmigen Verbinders 32 miteinander verbunden sein, um an diesem Ende einen gasdichten oder partikeldichten Abschluss der Filterelemente 10 miteinander auszubilden. Durch das Verbinden von mindestens zwei Filterkerzen kann ein Interferenzsystem ausgebildet werden, bei dem sich der Druck in allen miteinander verbundenen Filterelementen 10 ausgleicht oder sich insbesondere die Filterflächenbelastung homogenisiert, um die Reinigungsleistung weiter zu erhöhen. Beispielsweise können jeweils ein Drittel der in der Reinigungsvorrichtung 30 vorgesehen Filterkerzen über mehrere Verbinder 32 miteinander verbunden sein. Ferner kann auch eine weitere Reingasaustrittsvorrichtung 33 an diesem Ende vorgesehen sein, um die Saugleistung zu erhöhen.

Alternativ zum eben beschriebenen Saugverfahren kann die Reinigungsvorrichtung 30 zum Filtern von Partikeln aus einem heißen Gas auch in einem Druckverfahren betrieben werden. Dabei wird das zu reinigende Gas mit Überdruck auf der Rohgasseite durch die zumindest zwei Filterelemente 10 in die Reingasaustrittsvorrichtung 31 gedrückt. Entscheidend ist, dass eine Druckdifferenz zwischen Rohgasseite und Reingasseite besteht, wobei der Druck auf der Rohgasseite größer als der Druck auf der Reingasseite ist. Im Saugverfahren wird dies durch einen Unterdruck auf der Reingasseite und im Druckverfahren durch einen Überdruck auf der Rohgasseite erzielt. Allerdings ist auch eine Kombination von Druck- und Saugverfahren möglich, um die Druckdifferenz weiter zu erhöhen.

Mit dem erfindungsgemäßen Filterelement können somit mehrere Filterelemente 10 modular miteinander verbunden werden, um einen zusammenhängenden oder zusammengesetzten Filter gewünschter Länge aus mehreren modularen Filterelementen 10 auszubilden. Somit können Filterlängen erzielt werden, die deutlich über den bisher möglichen Filterlängen liegen. Insbesondere können mit dem erfindungsgemäßen modularen Filterelement 10 Filter mit einer Gesamtlänge von mehr als 2,50 m und insbesondere von mehr als 3,00 m erzielt werden. Insbesondere von Vorteil ist hier auch, dass die modularen Filterelemente 10 mit einer vergleichsweise geringen Länge von etwa 1,50 m bis etwa 2,00 m hergestellt werden können, welche hochkant transportiert und erst am Einsatzort zusammengesetzt werden können. Dadurch kann die Gefahr einer Beschädigung während des Transports stark gesenkt werden, da die Filterelemente oder Filterkerzen nicht aufeinander liegend, sondern nebeneinander stehend mit heute üblicher Logistik, wie beispielsweise in einem Lastwagen oder Zug, transportiert werden können. Auch kann bei einer Beschädigung eines modularen Filterelements 10 einfach das beschädigte modulare Filterelement 10 ausgetauscht werden ohne den gesamten Filter, also alle miteinander verbundene Filterelemente 10, austauschen zu müssen. Somit können auch Kosten eingespart werden.

## Patentansprüche

1. Filterkerze zum Filtern von Partikeln aus einem heißen Gas mit zumindest zwei Filterelementen (10), von den jedes folgendes aufweist:
- ein faseriges Filtermaterial (11); und
- einen im faserigen Filtermaterial (11) eingebetteten, rohrförmigen Stützkörper (12), der eine Vielzahl von Öffnungen (13) und einen Kopplungsteil (14) aufweist, der an einem Ende des rohrförmigen Stützkörpers (12) vorgesehen ist und der einen gebördelten Rand des rohrförmigen Stützkörpers (12) oder einen flanschartigen Verbindungsabschnitt (15b) eines flanschförmigen Stützkörpers (15), der mit einem Ende des rohrförmigen Stützkörpers (12) verbunden ist, umfasst,
- wobei der gebördelte Rand oder der flanschartige Verbindungsabschnitt (15b) des Kopplungsteils (14) des einen Filterelements (10) mittels eines Verbindungsrings (16) mit dem gebördelten Rand oder dem flanschartigen Verbindungsabschnitt (15b) des Kopplungsteils (14) des anderen Filterelements (10) verbunden ist, sodass die zumindest zwei Filterelemente (10) so miteinander verbunden sind, dass die Verbindungsstelle der rohrförmigen Stützkörper (12) der Filterelemente (10) gasdicht oder partikeldicht verschlossen ist.

2. Filterkerze nach Anspruch 1, **dadurch gekennzeichnet, dass** der rohrförmige Stützkörper (12) der Filterelemente (10) einstückig ausgebildet ist.

3. Filterkerze nach einem der vorstehenden Ansprüche, **dadurch gekennzeichnet, dass** die Öffnungen (13) regelmäßig angeordnet und mit gleicher Größe in der Außenwand des rohrförmigen Stützkörpers (12) der Filterelemente (10) vorgesehen sind.

4. Filterkerze nach einem der vorstehenden Ansprüche, **dadurch gekennzeichnet, dass** die Öffnungen (13) eine Größe aufweisen, die groß genug ist, so dass der rohrförmige Stützkörper (12) der Filterelemente (10) nicht als Filter oder Sieb für das faserige Filtermaterial (11) wirkt.

5. Filterkerze nach einem der vorstehenden Ansprüche, **dadurch gekennzeichnet, dass** eine Öffnungsfläche der Außenwand des rohrförmigen Stützkörpers (12) der Filterelemente (10) im Vergleich zur Gesamtfläche der Außenwand des rohrförmigen Stützkörpers (12) bei 5% bis 80%, vorzugsweise bei 25% bis 80% und insbesondere bei 50% bis 70%.

6. Filterkerze nach einem der vorstehenden Ansprüche, **dadurch gekennzeichnet, dass** das faserige Filtermaterial (11) der Filterelemente (10) Glasfasern, Keramikfasern und/oder Hochtemperaturwollen, wie Aluminiumsilikatwolle und/oder Erdalkalisilikatwolle, umfasst.

7. Filterkerze nach einem der vorstehenden Ansprüche **dadurch gekennzeichnet, dass** der rohrförmige Stützkörper (12) der Filterelemente (10) ein metallisches Material, wie Stahl und/oder Edelstahl, umfasst und/oder sendzimirverzinkt ist.

8. Filterkerze nach einem der vorstehenden Ansprüche, **dadurch gekennzeichnet, dass** der rohrförmige Stützkörper (12) aus einem Lochblech oder Streckmetall ausgebildet ist.

9. Filterkerze nach einem der vorstehenden Ansprüche, **dadurch gekennzeichnet, dass** der rohrförmige Stützkörper (12) der Filterelemente (10) vom Filtermaterial (11) zumindest teilweise umschlossen ist.

10. Filterkerze nach einem der vorstehenden Ansprüche, **dadurch gekennzeichnet, dass** ein Ende eines der Filterelemente (10) mit dem faserigen Filtermaterial (11) verschlossen ist.

11. Filterkerze nach einem der vorstehenden Ansprüche, ferner mit einer an einem Ende eines der Filterelemente (10) vorgesehenen Aufnahmevorrichtung (20).

12. Filterkerze nach einem der vorstehenden Ansprüche, **dadurch gekennzeichnet, dass** ferner ein Skelett, insbesondere ein Metallskelett, vorgesehen ist, das im faserigen Filtermaterial (11) der Filterelemente (10) eingebettet ist und sich im Wesentlichen über die gesamte Länge des jeweiligen Filterelements (10) erstreckt.

13. Filterkerze nach einem der vorstehenden Ansprüche, ferner mit einem Verbindungsrohr (18), das in den Innenraum des rohrförmigen Stützkörpers (12) eines der zumindest zwei Filterelemente (10) eingesetzt ist und das in den Innenraum eines Endes des anderen der zumindest zwei Filterelemente (10) hineinragt, um einen Übergangsbereich zwischen den zumindest zwei verbundenen Filterelementen (10) abzustützen und/oder abzudichten.

14. Reinigungsvorrichtung (30) zum Filtern von Partikeln in einem heißen Gas, mit:
- einer Reingasaustrittsvorrichtung (31); und
- zumindest einer Filterkerze nach einem der vorstehenden Ansprüche, die an die Reingasaustrittsvorrichtung (31) angeschlossen ist wobei Gas von der Rohgasseite durch das faserige Filtermaterial (11) der zumindest zwei Filterelemente (10) der zumindest einen Filterkerze in den Innenraum der zumindest zwei rohrförmigen Stützkörper (12) der zumindest zwei Filterelemente (10) der zumindest einen Filterkerze auf der Reingasseite transportiert und dabei gefiltert wird.

## Claims

1. A filter candle for filtering particles out of a hot gas, having at least two filter elements (10), each of which comprises:
- a fibrous filter material (11); and
- a tubular support body (12) embedded in said fibrous filter material (11) and comprising a plurality of openings (13) and a coupling part (14), which is provided at one end of said tubular support body (12) and comprises a flanged edge of said tubular support body (12) or a flange-like connecting section (15b) of a flange-shaped support body (15), which is connected to one end of said tubular support body (12),
- wherein said flanged edge or said flange-like connecting section (15b) of said coupling part (14) of the one filter element (10) is connected by means of a connecting ring (16) to said flanged edge or said flange-like connecting section (15b) of said coupling part (14) of the other filter element (10) so that said at least two filter elements (10) are connected to one another such that the connecting point of said tubular support bodies (12) of said filter elements (10) is sealed gas-tightly or particle-tightly.

2. The filter candle as claimed in claim 1, **characterized in that** said tubular support body (12) of said filter elements (10) is formed as a single piece.

3. The filter candle as claimed in one of the preceding claims, **characterized in that** said openings (13) are arranged regularly and are provided with the same size in the outer wall of said tubular support body (12) of said filter elements (10).

4. The filter candle as claimed in claim 1, **characterized in that** said openings (13) have a size which is sufficiently large so that said tubular support body (12) of said filter elements (10) does not act as a filter or screen for said fibrous filter material (11).

5. The filter candle as claimed in claim 1, **characterized in that** an opening area of the outer wall of said tubular support body (12) of said filter elements (10) is at 5 % to 80 %, preferably at 25 % to 80 %, and in particular at 50 % to 70 %, compared to the total area of the outer wall of said tubular support body (12).

6. The filter candle as claimed in claim 1, **characterized in that** said fibrous filter material (11) of said filter elements (10) comprises glass fibres, ceramic fibres and/or high-temperature wools, such as aluminium silicate wool and/or alkaline earth silicate wool.

7. The filter candle as claimed in claim 1, **characterized in that** said tubular support body (12) of said filter elements (10) comprises a metallic material, such as steel and/or stainless steel, and/or is galvanized using the Sendzimir process.

8. The filter candle as claimed in one of the preceding claims, **characterized in that** said tubular support body (12) is formed from a perforated sheet or an expanded metal.

9. The filter candle as claimed in claim 1, wherein said tubular support body (12) of said filter elements (10) is at least partly enclosed by said filter material (11).

10. The filter candle as claimed in one of the preceding claims, **characterized in that** one end of one of said filter elements (10) is closed with said fibrous filter material (11).

11. The filter candle as claimed in one of the preceding claims, further comprising a receiving device (20) provided at one end of one of said filter elements (10).

12. The filter candle as claimed in one of the preceding claims, **characterized in that** a skeleton, in particular a metal skeleton, is further provided, which is embedded in said fibrous filter material (11) of said filter elements (10) and extends substantially over the entire length of the respective filter element (10).

13. The filter candle as claimed in one of the preceding claims, further comprising a connecting tube (18) which is inserted into the interior of said tubular support body (12) of one of said at least two filter elements (10) and which projects into the interior of one end of the other of said at least two filter elements (10) in order to support and/or seal a transitional region between the at least two connected filter elements (10).

14. A cleaning device (30) for filtering particles in a hot gas, comprising:
- a clean gas discharge device (31);
- at least one filter candle as claimed in one of the preceding claims, which is connected to said clean gas discharge device (31),
wherein gas is transported from the raw gas side through said fibrous filter material (11) of said at least two filter elements (10) of said at least one filter candle into the interior of said at least two tubular support bodies (12) of said at least two filter elements (10) of said at least one filter candle on the clean gas side and is thereby filtered.

## Revendications

1. Bougie filtrante pour filtrer des particules d'un gaz chaud, comportant au moins deux éléments de filtre (10) dont chacun présente ce qui suit :
- un matériau filtrant (11) fibreux ; et
- un corps de soutien (12) tubulaire encastré dans le matériau filtrant (11) fibreux, lequel présente une multitude d'ouvertures (13) et une partie de couplage (14) qui est prévue à une extrémité du corps de soutien (12) tubulaire et qui comprend un bord rabattu du corps de soutien (12) tubulaire ou un tronçon de liaison (15b) en forme de bride d'un corps de soutien (15) en forme de bride qui est relié à une extrémité du corps de soutien (12) tubulaire,
- dans lequel le bord rabattu ou le tronçon de liaison (15b) en forme de bride de la partie de couplage (14) dudit un élément de filtre (10) est relié au moyen d'une bague de liaison (16) au bord rabattu ou au tronçon de liaison (15b) en forme de bride de la partie de couplage (14) e l'autre élément de filtre (10), de telle sorte que lesdits au moins deux éléments de filtre (10) sont reliés l'un à l'autre de telle sorte que le point de liaison du corps de soutien (12) tubulaire des éléments de filtre (10) est fermé de manière étanche au gaz ou aux particules.

2. Bougie filtrante selon la revendication 1, **caractérisée en ce que** le corps de soutien (12) tubulaire des éléments de filtre (10) est réalisé d'une seule pièce.

3. Bougie filtrante selon l'une des revendications précédentes, **caractérisée en ce que** les ouvertures (13) sont agencées de manière régulière et avec la même taille dans la paroi extérieure du corps de soutien (12) tubulaire des éléments de filtre (10).

4. Bougie filtrante selon l'une des revendications précédentes, **caractérisée en ce que** les ouvertures (13) présentent une taille qui est assez grande, de telle sorte que le corps de soutien (12) tubulaire des éléments de filtre (10) n'agit pas en tant que filtre ou tamis pour le matériau filtrant (11) fibreux.

5. Bougie filtrante selon l'une des revendications précédentes, **caractérisée en ce qu'**une surface d'ouverture de la paroi extérieure du corps de soutien (12) tubulaire des éléments de filtre (10) s'élève de 5% à 80%, de préférence de 25% à 80%, et en particulier de 50% à 70% en comparaison avec la surface totale de la paroi extérieure du corps de soutien (12) tubulaire.

6. Bougie filtrante selon l'une des revendications précédentes, **caractérisée en ce que** le matériau filtrant (11) fibreux des éléments de filtre (10) comprend des fibres de verre, des fibres de céramique et/ou des laines à haute température telles que la laine de silicate d'aluminium et/ou la laine de silicate alcalino-terreux.

7. Bougie filtrante selon l'une des revendications précédentes, **caractérisée en ce que** le corps de soutien (12) tubulaire des éléments de filtre (10) comprend un matériau métallique tel que de l'acier et/ou de l'acier noble et/ou est galvanisé selon le procédé Sendzimir.

8. Bougie filtrante selon l'une des revendications précédentes, **caractérisée en ce que** le corps de soutien (12) tubulaire est réalisé à partir d'une tôle perforée ou d'un métal déployé.

9. Bougie filtrante selon l'une des revendications précédentes, **caractérisée en ce que** le corps de soutien (12) tubulaire des éléments de filtre (10) est entouré au moins partiellement par le matériau filtrant (11).

10. Bougie filtrante selon l'une des revendications précédentes, **caractérisée en ce qu'**une extrémité de l'un des éléments de filtre (10) est fermée avec le matériau filtrant (11) fibreux.

11. Bougie filtrante selon l'une des revendications précédentes, comportant en outre un dispositif de réception (20) prévu à une extrémité d'un des éléments de filtre (10).

12. Bougie filtrante selon l'une des revendications précédentes, **caractérisée en ce qu'**il est en outre prévu une ossature, en particulier une ossature métallique qui est encastrée dans le matériau filtrant (11) fibreux des éléments de filtre (10) et qui s'étend sensiblement sur toute la longueur de l'élément de filtre (10) respectif.

13. Bougie filtrante selon l'une des revendications précédentes, comportant en outre un tube de liaison (18) qui est inséré à l'intérieur du corps de soutien (12) tubulaire d'un desdits au moins deux éléments de filtre (10) et qui fait saillie à l'intérieur d'une extrémité de l'autre desdits au moins deux éléments de filtre (10) pour soutenir et/ou étancher une zone de transition entre lesdits au moins deux éléments de filtre (10) reliés.

14. Dispositif de purification (30) pour filtrer des particules dans un gaz chaud, comportant :
- un dispositif de sortie de gaz pur (31) ; et
- au moins une bougie filtrante selon l'une des revendications précédentes, qui est raccordée au dispositif de sortie de gaz pur (31), dans lequel du gaz est transporté et filtré depuis le côté gaz brut à travers le matériau filtrant (11) fibreux desdits au moins deux éléments de filtre (10) de ladite au moins une bougie filtrante jusqu'à l'intérieur desdits au moins deux corps de soutien (12) tubulaires desdits au moins deux éléments de filtre (10) de ladite au moins une bougie filtrante sur le côté gaz pur.
